# EUROPEAN PATENT APPLICATION

(11) **EP 3 950 772 A1**
(43) Date of publication of application: **09.02.2022**
(21) Application number: 20189539.8
(22) Date of filing: 05.08.2020
(51) Int. Cl.: C08G 65/00, C08G 65/331, C08G 65/333, C08G 65/337, B01F 17/00

(54) **NOVEL FLUOROSURFACTANTS AND USES THEREOF IN MICROFLUIDICS**

(71) Applicant: Emulseo SAS, 33600 Pessac (FR)
(72) Inventor: MAES, Florine, 33700 Mérignac (FR); PICHAVANT, Loïc, 33600 Pessac (FR)
(74) Representative: Lecca, Patricia S.

(57) **Abstract**

The present invention provides a novel surface-active material exhibiting strong utility as fluorosurfactants, for the preparation of emulsions, most specifically double or multiple emulsions which may be used in droplet-based microfluidics. The method of synthesizing such material is also disclosed herein.

## Description

### FIELD OF INVENTION

The present invention provides novel fluorosurfactants which are particularly useful in the preparation of emulsions in microfluidics, in particular for double or multiple emulsions. The present invention also provides a method of synthesizing such fluorosurfactants.

### BACKGROUND OF THE INVENTION

The manipulation of fluids to form fluid streams of desired configuration, discontinuous fluid streams, droplets, particles, dispersions, etc... for purposes of fluid delivery, product manufacture, synthesis, analysis, and the like, is a relatively well-studied art. Microfluidic technology refers to the work associated with devices that control and manipulate fluids on the length scale of microns. This field has been rapidly developed and is set to have broad applications in chemistry, pharmacology, biology, healthcare, and food industries. This technology was initially proposed to scale down sample volumes and channel dimensions to perform chemical or biological reactions with very small quantities of reagents and therefore saving processing time.

One such example is to integrate all processing steps of a reaction or a series of reactions on a single microfluidic device. This is often referred to as Lab-on-a-Chip (LOC) or micro-Total Analysis System (µTAS) devices. For some medical applications, microfluidic technology is developed to allow self-contained disposable devices to provide a safe and effective way to work with bio-hazardous or biological materials. Another concept called Lab-on-a-CD was introduced in recent years for biomedical analysis targeted towards *in vitro* diagnostics (IVD), which integrates complex assays in fluidic networks on centrifugal microfluidic systems. LOC devices have several attractive features such as low reagent consumption, minimized waste products, reduced reaction time, and relatively low cost. These benefits allow researchers to perform experiments that were impossible before, such as studying the kinetics of chemical reactions, fabricating special microbeads, or screening biological properties, etc... and is what makes the advancement of microfluidic technology so important.

Within the scope of microfluidics, emulsions refer to fluidic states which exist when a first fluid is dispersed in a second fluid that is typically immiscible or substantially immiscible with the first fluid. Examples of common emulsions are oil-in-water and water-in-oil emulsions. Double emulsions which consist of a droplet inside another droplet are commonly made using a two-stage emulsification technique, such as by applying mechanical shear forces through mixing to reduce the size of droplets formed during the emulsification process. Some of the techniques for preparing double emulsions are disclosed *inter alia* by Brower et al., (Lab Chip, 2020, 20, 2062-2074) and Chan et al., (Sci Rep. 2013 Dec 10:3:3462; DOI: 10.1038/srep03462).

Microfluidic methods have been used to insert a droplet inside of another droplet using multistep procedures. Methods based on fluidics technology have been developed to generate continuous streams of droplets including co-flowing streams, cross-flowing streams, and flow-focusing devices. In co-flowing stream methods, two tubes or needles of different diameters are inserted into one another. Immiscible liquids are then pumped through the two tubes. By controlling the relative rates of flow, the liquid emerging from the inner tube can be made to break up into droplets that are carried by the continuous stream of the outer liquid. That stream of droplets can subsequently be delivered into the stream of a third liquid, which strips each droplet and some of its surrounding liquid away from the tip of the tube or nozzle, mechanically forming a dispersed droplet-in-a-droplet.

International publication No. WO1984002000A1 first disclosed a droplet-based reactor features. Subsequently, US publication No. US20020058332A1 disclosed a microfluidic device comprising a main channel, and at least one inlet region in communication with the main channel at a droplet extrusion region. Significant progress in emulsion dynamics was later reported demonstrating multiphase fluid flow in microchannels by transporting the reagents inside aqueous droplets surrounded by an immiscible fluid.

Most emulsions comprise an aqueous phase and a hydrocarbon oil phase. Fluorocarbon oils are often immiscible with both water and hydrocarbon oils. Water or hydrocarbon oils may thus be dispersed as emulsion droplets in a fluorocarbon phase. The use of fluorocarbon oils as the continuous phase of an emulsion offers advantages over conventional hydrocarbon systems. For example, fluorocarbon oils may be well suited as the continuous phase for emulsions that require reduced diffusion and/or cross-contamination of hydrophilic or lipophilic material between droplets in the emulsion. Stabilizing such emulsions often requires the addition of appropriate surfactants. This is especially true because fluorocarbons are not commonly used as the continuous emulsion phase. Accordingly, new surfactants and surfactant systems for stabilizing droplets of water and hydrocarbon oils or organic solvents in a continuous fluorophilic phase are needed

Surfactants tend to accumulate at the surfaces or interfaces of the system in an oriented fashion and, in turn, alter the properties of those surfaces/interfaces to a marked extent. The characteristic properties of surfactants are because of their heterogeneous nature. Indeed, surfactants are typically formed by association of one or several macromolecular structures exhibiting hydrophilic and lipophilic characters. A surfactant is thus made up of two parts, a head and a tail, which exhibit different properties; the head is hydrophilic, while the tail is hydrophobic. Surfactants exhibit a fascinating range of applications in almost every chemical industry, such as in detergents, floatation, paints, dyestuffs, paper coatings, inks, plastics, fibers, personal care and cosmetics, agrochemicals, pharmaceuticals, food processing, etc.

Surfactant-stabilised emulsions comprising microdroplets of water in a continuous oil phase have found applications in microfluidic technologies, enabling, for example, high throughput screening, enzyme studies, nucleic acid amplification and other biological processes to be conducted. For example, biological assays may be performed in microfluidic devices using a very small quantity of biological material. In microfluidic applications the use of oils as the continuous phase in emulsion formation/production is beneficial because they have useful microfluidic properties, such as low friction, non-volatility (unlike alcohols), temperature-resistance plus can easily create oil-water emulsions. However, conventional surfactants are generally not suitable for stabilising emulsions comprising a fluorous oil phase because of solubility issues, additionally they are often toxic to biological molecules or toxic to cells, further they do not form stable emulsions and can hinder gas transfer from the external environment to the inner regions of the emulsion. Thus, a need for further suitable surfactants still exists.

Droplet-based microfluidics have made large impacts in diverse areas such as enzyme evolution, chemical product screening, polymer engineering, and single-cell analysis. However, while droplet reactions have become increasingly sophisticated, the findings of appropriate surfactants remain a field-wide bottleneck, and there is a continuous considerable interest in polymeric surfactants which may be used as stabilizers for suspensions and emulsions for droplet-based microfluidics.

Surfactants or surface-active agents are crucial for the stabilization of droplet-based microfluidic systems, and these surfactants are often not available or do not have desirable physical characteristics. Development of surfactants are even more crucial for use in double emulsion or multiple emulsion microfluidic systems. Such double or multiple emulsions generally comprise larger droplets that contain one or more smaller droplets therein which, in some cases, can contain even smaller droplets therein, etc... Emulsions, including multiple emulsions, can be formed in certain embodiments with generally precise repeatability, and can be tailored to include any number of inner droplets, in any desired nesting arrangement, within a single outer droplet.

Conventional surfactants generally comprise a hydrophilic headgroup soluble in an aqueous phase of an emulsion and one or more lipophilic tails soluble in an oil phase of an emulsion. For example, surfactants of the general formula R_{f}-C₂H₄-SO₃M, wherein R_{f} represents a perfluorinated aliphatic group and wherein M represents a cation, have been disclosed in US Patent No. 5,789,508; US Patent No. 4,025,709, US Patent No. 5,688,884 and US Patent No. 4,380,618.

US Patent No. 5,763,552 discloses partially fluorinated surfactants of the general formula R_{f}-(CH₂)ₘ₋R'_{f}-COOM wherein R_{f} represents a perfluoroalkyl group or a perfluoroalkoxy group of 3 to 8 carbon atoms, R'_{f} represents a perfluoroalkylene of 1 to 4 carbon atoms and m is 1-3.

US Publication No. 2005/0090613 discloses fluorinated polyethers of the formula: F-(CF₂)ₘ-O-[CFX-CF₂-O]ₙ-CFX-COOA wherein m is 3 to 10, X is F or a perfluoroalkyl group, n is 0, 1 or 2 and A is the counter ion of the carboxylic anion. These polyethers are taught as emulsifiers in the emulsion polymerization of fluorinated olefins.

The use of perfluoropolyethers having neutral end groups in an aqueous emulsion polymerization is disclosed in U.S. Pat. No. 4,864,006, U.S. Pat. No. 4,789,717 and EP 625526. For example, U.S. Pat. No. 4,864,006 and EP 625526 disclose the use of microemulsion prepared from perfluoropolyethers having neutral end groups in an aqueous emulsion polymerization of fluorinated monomers. Some perfluoropolyethers having carboxylic end groups are disclosed to emulsify the neutral perfluoropolyether.

European patent application No. 1334996A1 discloses certain perfluoropolyethers having carboxylic acid groups or salts thereof at both end groups, i.e. the perfluoropolyethers are bifunctional. The perfluoropolyethers are taught for use in aqueous dispersions of fluoropolymers and in the preparation of such dispersion by aqueous emulsion polymerization.

International publication WO00/71590 discloses the use of a combination of perfluoropolyether surfactants having a carboxylic acid group or salt thereof with a fluoroalkyl carboxylic acid or sulphonic acid or salt thereof. It is taught that the perfluoropolyether surfactants on their own are not very powerful surfactants.

European patent EP2077912 B1 discloses a fluorosurfactant having the formula: AX-B or A-X1-B-X2-A, wherein: each instance of A is independently F-[CF(CF3)CF2O]x-CF(CF3)CONH-, wherein x is greater than or equal to 8; each instance of X, X1, and X2 is independently a covalent bond, a morpholino group, a phosphate group, or a carbonyl group; and each instance of B is independently -(CnH2nO)y- or -(CnH2nO)y-CH3, wherein n is an integer greater than 0 and y is integer greater than or equal to 10.

European patent application No. EP3463636A1 discloses a surfactant having a formula selected from the group consisting of: B-((X)x-(CH2)a-A)n (VI), (A-(CH2)a-(X)x-B-(X)x-(CH2)a-A)n (IV), (A-(CH2)a-(X)x-B)n (V), and (B)n-(X)x-(CH2)a-A (VII), wherein, A is a perfluoropolyether; a is a positive integer; X is either a covalent bond or a linking group; x is a positive integer; B is a polyalkylene oxide unit; n is a positive integer greater than 1 and, in compounds comprising more than one A, B, X, a and x, each may be the same or different.

Few other examples of fluorosurfactants have previously been described in WO2008/021123 and US 6,638,749. However most often these were still toxic to cells or damaged biological molecules and did not have the optimal chemical or temperature properties to provide emulsion stability for biological applications involving temperature cycling, for example the polymerase chain reaction (PCR), or for long-term studies in emulsion.

The present invention provides novel optimized fluorosurfactants which may be used in droplet-based microfluidic experiments, and in particular for use in double and/or multiple emulsions. This work resolves several hurdles in the field of high-throughput droplet analysis and paves the way for a variety of new droplet assays, such as for example FACS, single cell experiments, high-throughput phenotyping, selection, and other biochemical methods performed on a microfluidic platform. None of the cited references discloses a surface-active substance as claimed in the present invention.

### SUMMARY OF THE INVENTION

The present invention thus provides a novel optimized surface-active material comprising one or more fluorosurfactants having the formula (I) or of formula (II), or the combination of one or more fluorosurfactants of formula (I) with one or more fluorosurfactants of formula (II):

R_{f}-L-Rₕ-L-R_{f} Formula (I)

or

Rₕ-L-R_{f}-L-Rₕ Formula (II)

The present invention also relates to a method of preparing the novel surface-active agents and fluorosurfactants and method of using them for the preparation of single, double, or multiple emulsion-based microfluidics.

The present invention further provides single, double, or multiple emulsions comprising the novel surface-active agents and fluorosurfactants of formula (I) and (II) and uses thereof in microfluidic experiments.

### BRIEF DESCRIPTION OF THE FIGURES

**Figure 1** - depicts the droplets according to the present invention generated in a microfluidic observation chamber after generation.
**Figure 2****-** depicts pictures of the formed droplets (A) before thermocycling and (B) after thermocycling

### DETAILED DESCRIPTION

As used herein the term "surface-active agent" or "surfactants", defines a molecule that, when combined with a first component defining a first phase, and a second component defining a second phase, facilitates assembly of separate first and second phases. Fluorosurfactants may have one or more main fluorophilic chains where one end of the chain is soluble in the fluorophilic phase of the emulsion and one or more chains that are not soluble in the fluorophilic phase of the emulsion (e.g., those chains may be soluble in the aqueous or lipophilic phase). Typically, fluorosurfactants may be multi-block fluorosurfactant (e.g., R_{f}RₕR_{f}RₕR_{f}Rₕ...), where one component of the chain (e.g., "R_{f}") is soluble in the fluorophilic phase and another component of the chain (e.g., "Rₕ") is soluble in the other phase (e.g., the aqueous or lipophilic phase). As used herein, a multi-block fluorosurfactant is a surfactant having an alternating copolymeric structure or an (R_{f}-Rₕ-)ₙ structure., i.e., R_{f}RₕR_{f}, R_{f}RₕR_{f}Rₕ, R_{f}RₕR_{f}RₕR_{f}, R_{f}RₕR_{f}RₕR_{f}RₕR_{f}, etc.). One block may be soluble in the fluorophilic phase of the emulsion and one block may be soluble in the other phase of the emulsion (e.g., the aqueous or lipophilic phase). Additional components may be present within the surfactant. For example, a multi-block surfactant may have other groups present within its polymeric structure, for example, linking moieties connecting R_{f} and Rₕ, e.g., (R_{f}-L-Rₕ-)ₙ, (R_{f}- Rₕ-L)ₙ, (R_{f}-L-Rₕ-L)ₙ, or the like, where "L" represents a covalent bond or a linking moiety, as described below.

As used herein, the term "fluorophilic" component comprises any fluorinated compound such as a linear, branched, cyclic, saturated, or unsaturated fluorinated hydrocarbon. The fluorophilic component can optionally include at least one heteroatom (e.g., in the backbone of the component). In some cases, the fluorophilic compound may be highly fluorinated, i.e., at least 30%, at least 50%, at least 70%, or at least 90% of the hydrogen atoms of the component are replaced by fluorine atoms. The fluorophilic component may comprise a fluorine to hydrogen ratio of, for example, at least 0.2:1, at least 0.5: 1, at least 1:1, at least 2:1, at least 5:1, or at least 10:1. In some such embodiments, at least 30%, at least 50%, at least 70%, or at least 90% but less than 100% of the hydrogen atoms of the component are replaced by fluorine atoms. In other cases, the fluorophilic component is perfluorinated, *i.e*., the component contains fluorine atoms but contains no hydrogen atom. Fluorophilic components compatible with the present invention may have low toxicity, low surface tension, and the ability to dissolve and transport gases.

As used herein, the term "nonaqueous" is meant to define material such as a fluid that is immiscible with water. That is, a liquid that when mixed with water will form a stable two-phase mixture. The non-aqueous phase need not be liquid but can be a solid or semi-solid lipid or other nonpolar substance that is not soluble in water. In some instances, the nonaqueous phase can include a lipophilic component (e.g., a hydrocarbon) or a fluorinated component (e.g., a fluorocarbon). The aqueous phase can be any liquid miscible with water; that is, any liquid that, when admixed with water, can form a room-temperature, single-phase solution that is stable. In some cases, the aqueous phase can comprise one or more physiologically acceptable reagents and/or solvents, etc. Non-limiting examples of aqueous phase materials include (besides water itself) methanol, ethanol, DMF (dimethylformamide), or DMSO (dimethyl sulfoxide).

The term "emulsion," as used herein, is a stable mixture of at least two immiscible liquids. In general, immiscible liquids tend to separate into two distinct phases. An emulsion is thus stabilized by the addition of a fluorosurfactant which functions to reduce surface tension between the at least two immiscible liquids and/or to stabilize the interface. Emulsions may include a discontinuous or disperse phase (i.e., the isolated phase stabilized by a surfactant) formed of an aqueous or lipophilic (e.g., hydrocarbon) substance. The continuous phase may be formed of a fluorophilic substance (e.g., a fluorocarbon). Emulsions may be water-in-fluorocarbon emulsions and hydrocarbon-in-fluorocarbon emulsions having a dispersed aqueous or hydrocarbon phase and a fluorocarbon continuous phase. The isolated disperse aqueous or lipophilic phase in a fluorophilic solvent may form a "reverse emulsion," which is simply one example of an emulsion. Such emulsions may be macroemulsions or microemulsions. Macroemulsions are emulsions that are kinetically stable, as compared to microemulsions, which are thermodynamically stable and undergo spontaneous formation. In some cases, microemulsions may include droplets having an average diameter of less than about 50 nm.

As used herein, the term "fluid" generally refers to a substance that tends to flow and to conform to the outline of its container, i.e., a liquid, a gas, a viscoelastic fluid, etc. Typically, fluids are materials that are unable to withstand a static shear stress, and when a shear stress is applied, the fluid experiences a continuing and permanent distortion. The fluid may have any suitable viscosity that permits flow. If two or more fluids are present, each fluid may be independently selected among essentially any fluids (liquids, gases, and the like) by those of ordinary skill in the art, by considering the relationship between the fluids. In some cases, the droplets may be contained within a carrier fluid, e.g., a liquid. It should be noted, however, that the present invention is not limited to only multiple emulsions. In some embodiments, single emulsions can also be produced

A "droplet," as used herein, is an isolated portion of a first fluid that is surrounded by a second fluid. It is to be noted that a droplet is not necessarily spherical, but may assume other shapes as well, for example, depending on the external environment. In one embodiment, the droplet has a minimum cross-sectional dimension that is substantially equal to the largest dimension of the channel perpendicular to fluid flow in which the droplet is located.

As used herein "double emulsion" or DEs have a double-droplet architecture in which an inner aqueous core is encapsulated in an outer oil shell that is subsequently surrounded by aqueous fluid. DE droplets can therefore be suspended in an aqueous buffer that can be mixed with standard FACS sheath buffers (e.g. PBS) for proper sort charging. High-throughput individual droplet isolation would unlock possibilities for single-cell and rare-variant assays, as well as subpopulation enrichment at low droplet numbers, allowing direct investigation of genotype-to phenotype linkages without cross-contamination as described by Brower et al, (https://doi.org/10.1101/803460). As an example of double emulsions, we can cite water-in-oil-in-water emulsions. The main difference between DE droplets and other microcapsule systems is that the microcapsule membrane which is often hydrogel itself is substituted with an oil layer. In DE case, no gelation step is involved when producing the droplets, which simplifies the encapsulation process and renders it unnecessary to control the viscosity of various phases to obtain a stable structure.

As used the terms "multiple emulsions" may refer to larger fluidic droplets that contain one or more smaller droplets therein which, in some cases, can contain even smaller droplets therein, etc. Any number of nested fluids can be produced as discussed in detail below, and accordingly, additional third, fourth, fifth, sixth, etc. fluids may be added in some embodiments of the invention to produce increasingly complex droplets within droplets. For example, an outer fluidic droplet may contain one, two, three, four, or more first fluidic droplets (i.e., composed of a first fluid), some or all of which can contain one, two, three, four, or more second fluidic droplets (i.e., composed of a second fluid).

The term "microfluidics" as used herein refers to volumes of sample, and/or reagent, and/or amplified polynucleotide are from about 0.1 µl to about 999 µl, such as from 1-100 µl, or from 2-µl. Similarly, as applied to a cartridge, the term microfluidic means that various components and channels of the cartridge, as further described herein, are configured to accept, and/or retain, and/or facilitate passage of microfluidic volumes of sample, reagent, or amplified polynucleotide.

The present invention thus provides a novel a novel optimized surface-active material comprising one or more fluorosurfactants having the following formula (I) or having the following formula (II), or the combination of one or more fluorosurfactants of formula (I) with one or more fluorosurfactant of formula (II):

R_{f}-L-Rₕ-L-R_{f} Formula (I)

and/or

Rₕ-L-R_{f}-L-Rₕ Formula (II)

wherein in each instance R_{f} is either H or is selected from one or more of the following units:
   a) -(-CF₂-O-)ₘ-(CF₂-CF₂-O-)ₙ-CF₂-CF₂-CF₃ or
   b) -CF₂-(-O-CF₂-CF₂-)ₙ-(-O-CF₂-)ₘ-
wherein m is between 0 and 80;
n is between 0 and 50; and
m+n is greater than 1
Rₕ in formula (I) is selected from one or more of the following units:
   a) -(-CH2-CH2-O-)p-
      wherein p is between 10 and 50;
   b) -(-CH₂-CH₂-O-)ₚ-(-CHCH₃-CH₂-O-)_{q}-
      wherein p is between 10 and 50 and q is between 1 and 20; and
Rₕ in formula (II) is selected from one or more of the following units:
   a) R-(-O-CH₂-CH₂-)ₚ-
      wherein p is between 10 and 120 and R is H or alkyl
   b) R-(-CH₂-CH₂-O-)ₚ-(-CHCH₃-CH₂-O-)_{q}-
      wherein p is between 10 and 120; q is between 1 and 120 and R=H or alkyl; or
      c) R-C-[(-CH₂-CH₂-O-)ₚ-]₃
      wherein p is between 3 and 20 and R is H; alkyl; or polyalkylene oxide; and L is a linking group.

Suitable "R_{f}" groups for the fluorosurfactants of formula (I) and (II) according to the present invention may be fluorinated, stable, inert, preferably saturated, non-polar, monovalent aliphatic radicals. They can be straight chain, branched chain, cyclic or combinations thereof. They can contain heteroatoms, bonded only to carbon atoms, such as oxygen, divalent or hexavalent sulfur, or nitrogen. R_{f} is preferably a fully fluorinated radical, but hydrogen or chlorine atoms can be present as substituents if not more than one atom of either is present for every two carbon atoms. The R_{f} group has at least 3 carbon atoms, preferably 3 to 14 carbon atoms, and preferably contains about 40% to about 80% fluorine by weight, more preferably about 50% to about 78% fluorine by weight. The terminal portion of the R_{f} group is a perfluorinated moiety, which will preferably contain at least 7 fluorine atoms, e.g., CF₃CF₂CF₂-, (CF₃)₂CF-, F₅SCF₂-. The preferred R_{f} groups are fully or substantially fluorinated and are preferably those perfluorinated aliphatic radicals of the formula CₜF₂ₜ₊₁- where t is 1 to 14.

Suitable "Rₕ" groups for the fluorosurfactants of formula (I) and (II) according to the present invention may be groups having at least 6 carbon atoms and more preferably at least 8 carbon atoms. These hydrocarbon groups may optionally contain 1 to 3 substituents which are preferably selected from the group consisting of chlorine, bromine, fluorine, hydroxy, amino groups, alkoxycarbonyl groups, alkoxy groups etc. More preferably however, the hydrocarbon group is unsubstituted and preferably saturated. Particularly preferred Rₕ groups may include unsubstituted linear or branched alkyl groups. Preferably such alkyl groups may have at least 8 carbon atoms. Rₕ groups may also contain cycloaliphatic groups such as cyclohexyl groups or cyclohexylene groups. In accordance with the present invention it is also possible to use a mixture of hydrocarbon compounds in the condensation reaction to make the fluorochemical composition thus yielding condensates having different hydrocarbon radicals. A preferred mixture includes a hydrocarbon compound wherein Rₕ is a linear alkyl group, and a hydrocarbon compound wherein Rₕ is a branched alkyl group.

Linking group L in the above formulas (I) and (II) preferably contains from 1 to about 20 carbon atoms. Optionally it can contain oxygen, nitrogen or sulfur containing groups or a combination thereof. The linking group may be selected from the group consisting of straight chain, branched chain or cyclic alkylene, arylene, aralkylene, sulfonyl, poly(alkyleneoxy), urethanylene, ureylene, carbonamidoalkylene or sulfonaridoalkylene groups. Preferably, the linking group may be selected from -CH₂-O- or -O-CH₂-, -C(O)NH-, -C(O)NMe-, -NHC(O)-, -NMeC(O)-, -C(O)S-, -SC(O)-, -C(O)O-, -OC(O)-, -OC(O)O-, -OC(O)NH-, -OC(O)NMe-, -O-, -S-, - NHC(O)NH-, -NMeC(O)NH-, -NHC(O)NMe-, -NHC(O)O-, -NMeC(O)O-,-SO₂NH-, - NHSO₂-, -NHSO₂-C₆H₄-O- and -O-C₆H₄-SO₂NH-. Most preferably, the linking group L is either -CH₂-O- or -O-CH₂-.

Furthermore, the linking moiety "L" (e.g., positioned between R_{f} and Rₕ components of a fluorosurfactant) may be chosen to assist the self-assembly and the packing of the fluorosurfactant at the interface. Additionally, a linking moiety may have a good impact on the CMC (critical micelle concentration), and therefore on the diffusion to a newly formed interface from the fluorophilic phase, which may be important for emulsification.

The expression "alkyl" refers to a saturated, straight-chain or branched hydrocarbon group that contains from 1 to 20 carbon atoms, preferably from 1 to 12 carbon atoms, especially from 1 to 6 (e.g. 1, 2, 3 or 4) carbon atoms, for example a methyl, ethyl, propyl, iso-propyl, n-butyl, iso-butyl, sec-butyl or tert-butyl. Furthermore, the term alkyl refers to groups in which one or more hydrogen atoms have been replaced by a halogen atom (preferably F or Cl) such as, for example, a 2,2,2-trichloroethyl or a trifluoromethyl group.

The expression "polyalkylene oxides" are defined as polymers of ethylene oxide, propylene oxide or copolymers of ethylene oxide and propylene oxide. The copolymers may be block or random.

Fluorosurfactants of formula (I) and/or (II) according to the present invention, comprise R_{f} having a molecular weight greater than 3,000 g/mol, and Rₕ has a molecular weight greater than 300g/mol g/mol. Also, the ratio of the molecular weights of the R_{f}:Rₕ portions of greater than or equal to 1:1, greater than or equal to 3:1, greater than or equal to 6:1, greater than or equal to 9:1, greater than or equal to 10:1, greater than or equal to 12:1, greater than or equal to 15:1, greater than or equal to 20:1; greater than or equal to 25:1, greater than or equal to 30:1, greater than or equal to 40:1, or greater than or equal to 50:1, etc... Preferably, ratio of the molecular weights of the R_{f}:Rₕ is greater than or equal to 3:1.

Fluorosurfactants of formula (I) according to the present invention may have the structure: CF₃-CF₂-CF₂-(-O-CF₂-CF₂-)ₙ-(-O-CF₂-)ₘ-CH₂-O-(-CH₂-CH₂-O-)ₚ-CH₂-(-CF₂-O-)ₘ-(-CF₂-CF₂-O-)ₙ-CF₂-CF₂-CF₃ wherein n=27, m=24 and p=23.

Fluorosurfactants of formula (II) according to the present invention may have the structure: CH₃-(-O-CH₂-CH₂-)ₚ-O-CH₂-(-CF₂-CF₂-O-)ₙ-(-CF₂-O-)ₘ-CF₂-CH₂-O-(-CH₂-CH₂-O-)ₚ-CH₃ wherein n=m=21 and p=114.

The present invention also provides a process for the preparation of the surface active material the process comprising:
Step (i) reacting a compound of the formula (III) 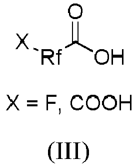 wherein R_{f} is as defined herein above;
   with suitable reagent and solvent to obtain a compound of formula (IV) 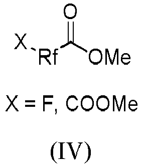
Step (ii) reducing the compound of formula (IV) to compound of formula (V) in the presence of suitable reducing agents and solvents: 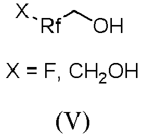
Step (iii) converting the compound of formula (V) to a compound of formula (VI) in the presence of suitable reagents and solvents 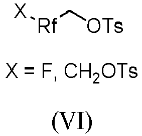
Step (iv) reacting the compound of formula (VI) with suitable Rₕ compound as defined herein above in the presence of suitable reagents and solvents to obtain the compound of formula (I) and/or (II):

   R_{f}-L-Rₕ-L-R_{f} Formula (I)

   and/or

   Rₕ-L-R_{f}-L-Rₕ Formula (II)

Suitable reagent used in step (i) may be selected from the group consisting of, but not limited to oxalyl chloride, SOCl₂, PCl₃, PCl₅, Ph₃P+CCl₄ and Cyanuric chloride; preferably the reagent is oxalyl chloride.

Suitable solvent used in step (i) may be selected from the group consisting of, but not limited to DCM, DMF, THF, Acetone, AcOEt, Acetonitrile, Diglyme and DMSO mixed with a hydrofluoroether oil and any combination thereof.

The temperature for carrying out the above reaction step (i) ranges from 55 °C to 70°C, preferably 60°C.

Suitable reducing agent used in step (ii) may be selected from the group consisting of, but not limited to: NaBH₄, BH₃, 9-borabiccyclo[3.3.1]nonane, LiAlH₄, AlH₃, H₂, KBH₄, LiAlH(OMe)₃ and LiAlH(SMe)_{3;} preferably NaBH₄.

Suitable solvent used in step (ii) may be selected from the group consisting of, but not limited to: DCM, DMF, THF, Acetone, AcOEt, Acetonitrile, Diglyme and DMSO mixed with a hydrofluoroether oil and any combination thereof.

The temperature for carrying out the above reaction step (i) ranges from 60 °C to 80°C, preferably 75°C.

Suitable reagent used in step (iii) have the general formula: 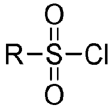 wherein R is an alkyl or an aryl group which can be partially or totally fluorinated; example tosyl chloride.

Suitable solvent used in step (iii) may be selected from the group consisting of, but not limited to: DCM, DMF, THF, Acetone, AcOEt, Acetonitrile, Diglyme and DMSO mixed with a hydrofluoroether oil and any combination thereof.

The temperature for carrying out the above reaction step (i) ranges from 55 °C to 70°C, preferably 60°C.

Suitable reagent used in step (iv) may be selected from the group consisting of, but not limited to: Li, Na, K, NaH, KH, tBuOK, sodium bis(trimethylsilyl)amide, lithium diisopropylamide; preferably NaH.

Suitable solvent used in step (iv) may be selected from the group consisting of, but not limited to: DCM, DMF, THF, Acetone, AcOEt, Acetonitrile, Diglyme, DMSO mixed with a hydrofluoroether oil and any combination thereof.

The temperature for carrying out the above reaction step (i) ranges from 55 °C to 70°C, preferably 60°C.

The general reaction scheme for the preparation of the surface-active material or fluorosurfactants of formula (I) or (II) is as below in scheme 1:

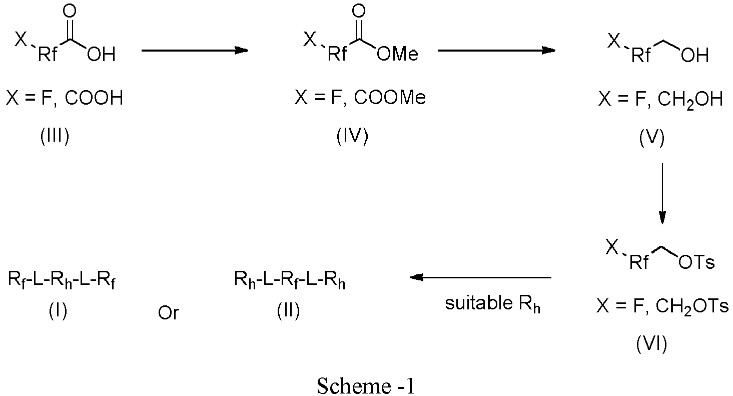

Possible ways to purify the products obtained according to the process of the present invention may include phase separation of the unreacted fluorophobic reactant from an appropriate low polarity fluorosolvent mixture. The unreacted fluorophobic compound may cream, forming a supernatant that may be easily decanted. At the same time, block-copolymer surfactant may phase separate if the critical micelle concentration is exceeded, but it may sediment, rather than cream, due to the high density of the fluorocarbon components contained in the surfactant molecules.

In principle, fluorosurfactants of formula (I) and (II) of the present invention are attached to a residue A, such as haptens, antigens, antibodies and substrates, as well as carriers and compounds derived therefrom.

By a hapten, according to the present invention there is to be understood a substance with a low molecular weight which, as a rule, is not able to produce antibodies. Compounds with a molecular weight of from about 100 to about 2000 are to be regarded as being substances with a low molecular weight. Examples of such substances include physiologically active substances which are present in the mammalian or human organism, as well as metabolites thereof and pharmaceutical substances which are administered to animals and humans, as well as metabolites thereof. However, by the term hapten there can also be understood all further low molecular weight compounds insofar as they only have a molecular weight in the above-mentioned range. Examples of possible haptens include amines, steroids, which have a molecular weight of at least about 2000 but preferably, however, a molecular weight of at least about 5000. The molecular weight of such compounds cannot be upwardly limited. The value can amount to up to 20 million but can also be greater than that.

Antigens may include for example, proteins, nucleic acids, polysaccharides, combinations thereof and other high molecular weight substances, According to the present invention, the term antigen is to be understood to mean all high molecular weight compounds which have a minimum molecular weight of about 2000.

Antibodies are all those proteins or glycoproteins which react specifically with antigens or haptens, as well as with compounds derived therefrom, to form a complex. According to the present invention, as ligands in compounds of general formula (I), there can be used intact antibodies as well as fragments thereof. According to the present invention, these fragments can also be called antibodies insofar as they are able to bind antigens and haptens, as well as compounds derived therefrom.

By substrates there are to be understood compounds which undergo a detectable change in a chemical reaction. For example, amongst these are to be understood all those compounds or materials derived therefrom upon which enzymes act, for example amino acids, peptides, proteins, glycosides, oligo- and polysaccharides, nucleotides, nucleic acids and combinations thereof and other enzymatically changeable substances.

Carriers can be naturally occurring or synthetic, cross-linked, or non-cross-linked materials with or without a definite shape. Hereunder are to be understood individual compounds or mixtures of compounds. As carriers, there can be used, for example, compounds or 5 mixtures of compounds, for example polysaccharides, nucleic acids, peptides, proteins and combinations thereof, as well as rubber, lignin, glass, charcoal, synthetic addition and condensation polymers, such as polystyrene, polyacrylics, vinyl compounds, polyesters, polyethers and polyamides, and also complex structures, such as latex particles, vesicles, liposomes, cell wall parts or even whole cells.

The present invention still also provides with an emulsion, either simple, double, or multiple emulsions, comprising a surface-active material or one or more fluorosurfactants of formula (I) and/or of formula (II) as defined herein above, and the use of said surface-active material or fluorosurfactants in the preparation of these emulsions.

Such emulsions may be stable for at least about 1 minute, at least about 5 minutes, at least about 10 minutes, at least about 20 minutes, at least about 30 minutes, at least about 40 minutes, at least about 1 hour, at least about 2 hours, at least about 6 hours, at least about 12 hours, at least about 1 day, at least about 1 week, at least about 1 month, or at least about 2 months, at a temperature of about 25 degrees Celsius and a pressure of 1 atm. As used herein, a "stable emulsion" means that at least about 95% of the droplets of the emulsion do not coalesce, e.g., to form larger droplets over these periods of time.

The capability to tune the compositions, lengths, molecular weights, and/or the geometry of the surfactants as described herein (which may be synthesized by forming a covalent bond between the fluorophilic and hydrophilic/lipophilic components and/or by graft polymerization, for example) allows for the tailored stabilization of droplets according to certain embodiments of the present invention. In some embodiments, higher ratios of fluorophilic component to hydrophilic (or lipophilic) component may be appropriate for the stabilization of very small aqueous droplets. Lower ratios may be useful for stabilizing fluorocarbon-in-water emulsions, for example. In particular, the stabilization of double- and multiple emulsions is possible and thus the present invention preferably relates to double or multiple emulsions comprising one or more fluorosurfactant of formula (I) and/or (II).

As mentioned above, the emulsions according to the present invention may include discontinuous aqueous and/or lipophilic (e.g., hydrocarbon) droplets in a continuous, fluorophilic phase. This means that separate, isolated regions of droplets of an aqueous and/or lipophilic component are contained within a continuous fluorophilic phase, which may be defined by a fluorocarbon component. The discontinuous aqueous and/or lipophilic droplets in the nonaqueous phase typically have an average cross-sectional dimension of greater than 25 nm. In some embodiments, the average cross-sectional dimension of the droplets is greater than 50 nm, greater than 100 nm, greater than 250 nm, greater than 500 nm, greater than 1 micron, greater than 5 microns, greater than 10 microns, greater than 50 microns, greater than 100 microns, greater than 200 microns, or greater than 500 microns, etc. As used herein, the average cross-sectional dimension of a droplet is the diameter of a perfect sphere having the same volume as the droplet.

Emulsions of the present invention may be formed using any suitable emulsification procedure known to those of ordinary skill in the art. In this regard, it will be appreciated that the emulsions can be formed using microfluidic systems, ultrasound, high pressure homogenization, shaking, stirring, spray processes, membrane techniques, or any other appropriate method. For example, a micro-capillary or a microfluidic device is used to form an emulsion. The size and stability of the droplets produced by this method may vary depending on, for example, capillary tip diameter, fluid velocity, viscosity ratio of the continuous and discontinuous phases, and interfacial tension of the two phases.

In general, there are two main types of double emulsions: (i) water-in-oil-in-water type (w/o/w) where water droplets are dispersed in oil droplets, which in turn are dispersed in a continuous aqueous phase, and (ii) oil-in-water-in-oil type (o/w/o) where oil droplets are located within water droplets that are dispersed within continuous oil. These emulsions are with dispersed oil globules containing smaller aqueous droplets or vice versa. An application of the w/o/w system has been applied in human pharmaceuticals as drug delivery systems for carrying hydrophilic drugs to target tissues.

The present invention further provides a method of using the surface active material or fluorosurfactants of formula (I) and/or (II) in microfluidics as well as the use of said single, double or multiple emulsions containing said fluorosurfactants of formula (I) and/or (II) in droplet-based microfluidic experiments,

Non-limiting examples of microfluidic systems potentially suitable for use with the instant invention include the following, each incorporated herein by reference: U.S. patent publication No. 2005/0172476; US patent publication No. 2006/016338527; US patent publication No. 2007/0003442; and international publication WO 2006/096571.

The surface-active material or fluorosurfactants of formula (I) and/or (II) according to the present invention may be used in a microfluidic channel or device, in a molecular isolation in larger fluidic devices, containers or vats, or in an automated device with associated software that controls a microfluidic channel or device.

Droplets of varying sizes and volumes may be generated within the microfluidic system. These sizes and volumes can vary depending on factors such as fluid viscosities, infusion rates, and nozzle size/configuration. Droplets may be chosen to have different volumes depending on the particular application. For example, droplets can have volumes of less than 1 µl (microliter), less than 0.1 µL (microliter), less than 10 mL, less than 1 mL, less than 0.1 mL, or less than 10 pL.

The fluorosurfactants of the present application may be used in various bioassays, such as biosensing, cell assay, energy transfer-based assay, probing, protein/immunological assay and microarray/biochip assay. Among the arrays used in microarray/biochip assay, fluorescence-based microarrays/biochips, such as antibody/protein microarrays, bead/suspension arrays, capillary/sensor arrays, DNA microarrays/polymerase chain reaction (PCR)-based arrays, glycan/lectin arrays, immunoassay/enzyme-linked immunosorbent assay (ELISA)-based arrays, microfluidic chips and tissue arrays, have been developed and used for the assessment of allergy/poisoning/toxicity, contamination and efficacy/mechanism, and quality control/safety.

Use of the fluorosurfactants according to the present invention may be particularly suited for sequence specific sorting of DNA molecules with FACS using 3dPCR. 3dPCR is made possible by the ability of microfluidic devices to form monodisperse droplets from a sample containing a mixture of DNA molecules. By controlling the concentration of molecules in the sample, the number encapsulated in each droplet can be tuned down to single molecules24. Critical to using double emulsions for PCR detection of target molecules is stabilizing the droplets through thermal cycling reactions. The use of present invention can accomplish this using novel fluorosurfactants due to the incredible stability of the emulsions they form, including for the high temperatures of PCR. 3dPCR allows a FACS instrument to "read" a target DNA sequence using a PCR assay. However, FACS is capable of more than detection, it can also sort based on the measurement. This, in essence, allows a mixed population of DNA molecules to be interrogated individually, to recover all molecules matching the PCR assay criterion; it also provides a novel way to enrich DNA that affords substantial advantages over conventional methods based on common PCR or oligo capture.

The microfluidic device for use according to the present invention may include one or more analysis units. An "analysis unit" is a microelement, e.g., a microchip. The analysis unit includes at least one inlet channel, at least one main channel, at least one inlet module, at least one coalescence module, and at least one detection module. The analysis unit can further include one or more sorting modules. The sorting module can be in fluid communication with branch channels which are in fluid communication with one or more outlet modules (collection module or waste module). For sorting applications, at least one detection module cooperates with at least one sorting module to divert flow via a detector-originated signal. It shall be appreciated that the "modules" and "channels" are in fluid communication with each other and therefore may overlap, i.e., there may be no clear boundary where a module or channel begins or ends. A plurality of analysis units of the invention may be combined in one device. The microfluidic device for use according to the present invention include channels that form the boundary for a fluid. A "channel," as used herein, means a feature on or in a substrate that at least partially directs the flow of a fluid. In some cases, the channel may be formed, at least in part, by a single component, e.g., an etched substrate or molded unit. The channel can have any cross-sectional shape, for example, circular, oval, triangular, irregular, square or rectangular (having any aspect ratio), or the like, and can be covered or uncovered (i.e., open to the external environment surrounding the channel). In embodiments where the channel is completely covered, at least one portion of the channel can have a cross-section that is completely enclosed, and/or the entire channel may be completely enclosed along its entire length with the exception of its inlet and outlet. An open channel generally will include characteristics that facilitate control over fluid transport, e.g., structural characteristics (an elongated indentation) and/or physical or chemical characteristics (hydrophobicity vs. hydrophilicity) and/or other characteristics that can exert a force (e.g., a containing force) on a fluid. The fluid within the channel may partially or completely fill the channel. In some cases the fluid may be held or confined within the channel or a portion of the channel in some fashion, for example, using surface tension (e.g., such that the fluid is held within the channel within a meniscus, such as a concave or convex meniscus). In an article or substrate, some (or all) of the channels may be of a particular size or less, for example, having a largest dimension perpendicular to fluid flow of less than about 5 mm, less than about 2 mm, less than about 1 mm, less than about 500 microns, less than about 200 microns, less than about 100 microns, less than about 60 microns, less than about 50 microns, less than about 40 microns, less than about 30 microns, less than about 25 microns, less than about 10 microns, less than about 3 microns, less than about 1 micron, less than about 300 ran, less than about 100nm, less than about 30 nm, or less than about 10 nm or less in some cases. Of course, in some cases, larger channels, tubes, etc. can be used to store fluids in bulk and/or deliver a fluid to the channel. In one embodiment, the channel is a capillary. The dimensions of the channel may be chosen such that fluid is able to freely flow through the channel, for example, if the fluid contains cells. The dimensions of the channel may also be chosen, for example, to allow a certain volumetric or linear flow rate of fluid in the channel. Of course, the number of channels and the shape of the channels can be varied by any method known to those of ordinary skill in the art. In some cases, more than one channel or capillary may be used. For example, two or more channels may be used, where they are positioned inside each other, positioned adjacent to each other, etc.

A most preferred configuration of microfluidic device according to the present invention is a droplet microfluidizer. A "droplet," as used herein, is an isolated portion of a first fluid that completely surrounded by a second fluid. In some cases, the droplets may be spherical or substantially spherical ; however, in other cases, the droplets may be non-spherical, for example, the droplets may have the appearance of "blobs" or other irregular shapes, for instance, depending on the external environment. As used herein, a first entity is "surrounded" by a second entity if a closed loop can be drawn or idealized around the first entity through only the second entity. The dispersed phase fluid can include a biological/chemical material. The biological/chemical material can be tissues, cells, particles, proteins, antibodies, amino acids, nucleotides, small molecules, and pharmaceuticals. The biological/chemical material can include one or more labels known in the art. The label can be a DNA tag, dyes or quantum dot, or combinations thereof. Droplets The term "emulsion" refers to a preparation of one liquid distributed in small globules (also referred to herein as drops, droplets or NanoReactors) in the body of a second liquid. The first and second fluids are immiscible with each other. For example, the discontinuous phase can be an aqueous solution and the continuous phase can a hydrophobic fluid such as an oil. This is termed a water in oil emulsion. Alternatively, the emulsion may be a oil in water emulsion. In that example, the first liquid, which is dispersed in globules, is referred to as the discontinuous phase, whereas the second liquid is referred to as the continuous phase or the dispersion medium. The continuous phase can be an aqueous solution and the discontinuous phase is a hydrophobic fluid, such as an oil (e.g., decane, tetradecane, or hexadecane). The droplets or globules of oil in an oil in water emulsion are also referred to herein as "micelles", whereas globules of water in a water in oil emulsion may be referred to as "reverse micelles". The fluidic droplets may each be substantially the same shape and/or size. The shape and/or size can be determined, for example, by measuring the average diameter or other characteristic dimension of the droplets. The "average diameter" of a plurality or series of droplets is the arithmetic average of the average diameters of each of the droplets. Those of ordinary skill in the art will be able to determine the average diameter (or other characteristic dimension) of a plurality or series of droplets, for example, using laser light scattering, microscopic examination, or other known techniques. The diameter of a droplet, in a non-spherical droplet, is the mathematically-defined average diameter of the droplet, integrated across the entire surface. The average diameter of a droplet (and/or of a plurality or series of droplets) may be, for example, less than about 1 mm, less than about 500 micrometers, less than about 200 micrometers, less than about 100 micrometers, less than about 75 micrometers, less than about 50 micrometers, less than about 25 micrometers, less than about 10 micrometers, or less than about 5 micrometers in some cases. The average diameter may also be at least about 1 micrometer, at least about 2 micrometers, at least about 3 micrometers, at least about 5 micrometers, at least about 10 micrometers, at least about 15 micrometers, or at least about 20 micrometers in certain cases.The droplet forming liquid is typically an aqueous buffer solution, such as ultrapure water (e.g., 18 mega-ohm resistivity, obtained, for example by column chromatography), 10 mM Tris HCl and 1 mM EDTA (TE) buffer, phosphate buffer saline (PBS) or acetate buffer. Any liquid or buffer that is physiologically compatible with the population of molecules, cells or particles to be analyzed and/or sorted can be used. The fluid passing through the main channel and in which the droplets are formed is one that is immiscible with the droplet forming fluid. The fluid passing through the main channel can be a non-polar solvent, decane (e g., tetradecane or hexadecane), fluorocarbon oil, silicone oil or another oil (for example, mineral oil). The dispersed phase fluid may also contain biological/chemical material (e.g., molecules, cells, or other particles) for combination, analysis and/or sorting in the device. The droplets of the dispersed phase fluid can contain more than one particle or can contain no more than one particle. For example, where the biological material comprises cells, each droplet preferably contains, on average, no more than one cell. However, in some embodiments, each droplet may contain, on average, at least 1000 cells. The droplets can be detected and/or sorted according to their contents. The concentration (i.e., number) of molecules, cells or particles in a droplet can influence sorting efficiently and therefore is preferably optimized, hi particular, the sample concentration should be dilute enough that most of the droplets contain no more than a single molecule, cell or particle, with only a small statistical chance that a droplet will contain two or more molecules, cells or particles. This is to ensure that for the large majority of measurements, the level of reporter measured in each droplet as it passes through the detection module corresponds to a single molecule, cell or particle and not to two or more molecules, cells or particles. The fluids used to generate droplets in microfluidic devices are typically immiscible liquids such as oil and water. These two materials generally have very different dielectric constants associated with them. These differences can be exploited to determine droplet rate and size for every drop passing through a small section of a microfluidic device. One method to directly monitor this variation in the dielectric constant measures the change in capacitance over time between a pair of closely spaced electrodes.

The present invention also provides solid phase particles and methods for the forming solid phase particles on a microfluidic device for downstream analysis. The solid phase particles can be used for various biological or chemical analysis (e.g., DNA or protein analyses). For DNA analysis, post amplification encapsulation of amplicons occurs within a gel or polymer matrix prior to breaking of the droplet emulsion. Amplification reactions within droplets using one of several amplification type methods (described in further detail herein), including, but not limited to; PCR, Rolling Circle Amplification (RCA), Nucleic Acid Sequence Based Amplification (NASBA), ligase chain reaction, etc. followed by encapsulation/solidification of the amplified reaction within the droplets by either polymerizing the droplets using chemical or physical means. A physical means might be termed 'gelling' whereby one incorporates low temperature agarose within the droplet during formulation and keeping the droplet above the solidification temperature until one desires the droplet to solidify.

The microfluidic device of the present invention can also include one or more detection modules. A "detection module" is a location within the device, typically within the main channel where molecules, cells, small molecules or particles are to be detected, identified, measured or interrogated on the basis of at least one predetermined characteristic. The molecules, cells, small molecules or particles can be examined one at a time, and the characteristic is detected or measured optically, for example, by testing for the presence or amount of a reporter. For example, the detection module is in communication with one or more detection apparatuses. The detection apparatuses can be optical or electrical detectors or combinations thereof. Examples of suitable detection apparatuses include optical waveguides, microscopes, diodes, light stimulating devices, (e.g., lasers), photo multiplier tubes, and processors (e.g., computers and software), and combinations thereof, which cooperate to detect a signal representative of a characteristic, marker, or reporter, and to determine and direct the measurement or the sorting action at the sorting module. However, other detection techniques can also be employed The term "determining," as used herein, generally refers to the analysis or measurement of a species, for example, quantitatively or qualitatively, and/or the detection of the presence or absence of the species. "Determining" may also refer to the analysis or measurement of an interaction between two or more species, for example, quantitatively or qualitatively, or by detecting the presence or absence of the interaction. Examples of suitable techniques include, but are not limited to, spectroscopy such as infrared, absorption, fluorescence, UV/visible, FTIR ("Fourier Transform Infrared Spectroscopy"), or Raman; gravimetric techniques; ellipsometry; piezoelectric measurements; immunoassays; electrochemical measurements; optical measurements such as optical density measurements; circular dichroism; light scattering measurements such as quasielectric light scattering; polarimetry; refractometry; or turbidity measurements as described further herein. A detection module is within, communicating or coincident with a portion of the main channel at or downstream of the inlet module and, in sorting embodiments, at, proximate to, or upstream of, the sorting module or branch point. The sorting module may be located immediately downstream of the detection module or it may be separated by a suitable distance consistent with the size of the molecules, the channel dimensions and the detection system. Precise boundaries for the detection module are not required, but are preferred.

As a matter of convenience, predetermined amounts of fluorosurfactants and/or emulsions described herein and employed in the present invention can be optionally provided in a kit in packaged combination to facilitate the application of the various assays and methods described herein. Such kits also typically include instructions for carrying out the subject assay, and may optionally include the fluid receptacle, e.g., the cuvette, multiwell plate, microfluidic device, etc. in which the reaction is to be carried out. Typically, fluorosurfactants and reagents included within the kit may uniquely labelled emulsions containing tissues, cells, particles, proteins, antibodies, amino acids, nucleotides, small molecules, substrates, and/or pharmaceuticals. These fluorosurfactants, reagents and/or emulsions may be provided in premeasured container (e.g., vials or ampoules) which are co-packaged in a single box, pouch or the like that is ready for use. The container holding may be configured so as to readily attach to the fluid receptacle of the device in which the reaction is to be carried out (e.g., the inlet module of the microfluidic device as described herein), hi one embodiment, the kit can include an RNAi kit. In another embodiment, the kit can include a chemical synthesis kit. It will be appreciated by persons of ordinary skill in the art that these embodiments are merely illustrative and that other kits are also within the scope of the present invention.

### EXAMPLES

### Example 1: Preparation of CF3-CF2-CF2-(-O-CF2-CF2-)n-(-O-CF2-)m-CH2-O-(-CH2-CH2-O-)p-CH2-(-CF2-O-)m-(-CF2-CF2-O-)n-CF2-CF2-CF3 with n=27, m=24 and p=23

The process for the preparation is represented in scheme-2 below:

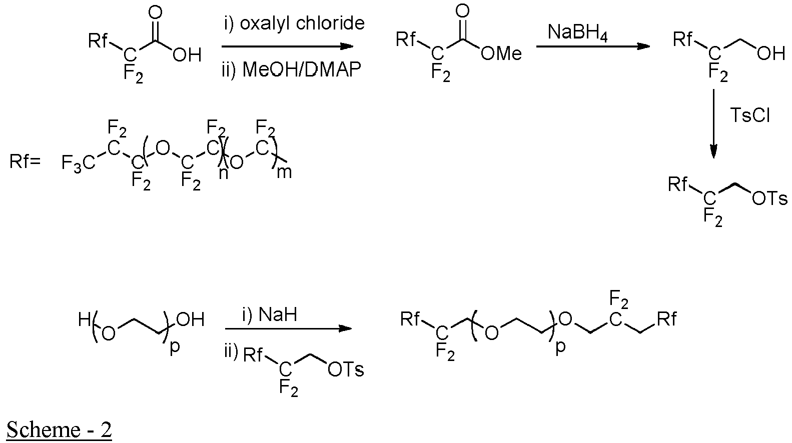

### Step (i)

20 g of 7327X (Mw=5000 g/mol; Solvay) is taken in a 100 mL two neck round bottom flask equipped with a magnetic stirrer bar, a condenser and a rubber seal. The flask is placed under vacuum and refilled with argon three times to outgas the polymer.50 mL of HFE Novec^{™} 7200 is added via the rubber seal to dissolve the polymer and 1.7 mL (5 eq) of oxalyl chloride is added drop wise followed by 50 µL of DMF. The reaction is stirred at 60°C overnight and the mixture is evaporated dryness to obtain the acyl chloride functionalized product.

This product is dissolved in 50 mL of HFE Novec^{™} 7200 in a 100 mL two neck round bottom flask equipped with a magnetic stirrer bar, a condenser and a rubber seal and 1g of polymer supported 4-dimethylaminopyridine (1.5 eq) is added. The reaction mixture is placed under argon and 5 mL of anhydrous methanol is added via the rubber seal. The reaction is stirred at 60°C overnight. The polymer supported 4-dimethylaminopyridine is filtered and the methyl ester functionalized product is obtained after evaporation.

### Step (ii):

2.85 g of sodium borohydrate is taken in a 100 mL two neck round bottom flask equipped with a magnetic stirrer bar, a condenser and a rubber seal and 5 mL of HFE Novec^{™} 7200 and 4mL of diethylene glycol dimethylether are added. The reaction mixture is placed under argon at 0°C and 15 g of the previous methyl ester functionalized product dissolved in 15 mL of anhydrous HFE Novec^{™} 7200 is added drop wise. The reaction is heated at 75°C for one hour under stirring. After cooling, the reaction mixture is diluted with 150 mL of HFE Novec^{™} 7200 and the reaction is quenched with 100 mL of aqueous buffer solution pH7. The two phases are separated and the fluorinated phase is dried with sodium sulphate and filtered. The alcohol functionalized product is obtained after evaporation.

### Step (iii):

4 g of alcohol product is dissolved in 30 mL of anhydrous HFE Novec^{™} 7200 and taken in a two neck round bottom flask equipped with a magnetic stirrer bar, a condenser and a rubber seal. The reaction mixture is placed under argon and 1.1 mL of triethylamine (10 eq) is added drop wise under stirring.

1.5 g of tosyl chloride (10 eq.) dissolved in 20 mL of anhydrous THF is added drop wise. The reaction is placed at 60°C under stirring for 3 days. After cooling, 10 mL of ethanol is added and the fluorinated phase is washed twice with 10 mL of ethanol. The tosyl functionalized product is obtained after evaporation.

### Step (iv):

240 mg of sodium hydride dispersed in mineral oil (60 w/w%; 20 eq.) is washed with heptanes and taken in a two neck round bottom flask equipped with a magnetic stirrer bar, a condenser and a rubber seal. 5 mL of anhydrous THF is added to disperse the sodium hydride. 300 mg of PEG (Mw=1000 g/mol; 1 eq.) dissolved in 10 mL of THF is added drop wise under argon. The hydroxyl deprotonation is performed under stirring during 30 min. 3g of the tosyl functionalized product dissolved in 10 mL of anhydrous HFE Novec^{™} 7200 is added drop wise and the reaction mixture is placed at 60°C under argon for 3 days.

After cooling, the reaction is quenched with HCl 1M, the solvent is evaporated and the product is dissolved in 30 mL of FC770 and washed 3 times with 10 mL of ethanol. The final product is obtained after the evaporation of the fluorinated phase.

### Example 2: Preparation of Me-(-O-CH2-CH2-)p-O-CH2-(-CF2-CF2-O-)n-(-CF2-O-)m-CF2-CH2-O-(-CH2-CH2-O-)p-Me with n=m=21 and p=114

The process for the preparation is represented in scheme-3 below:

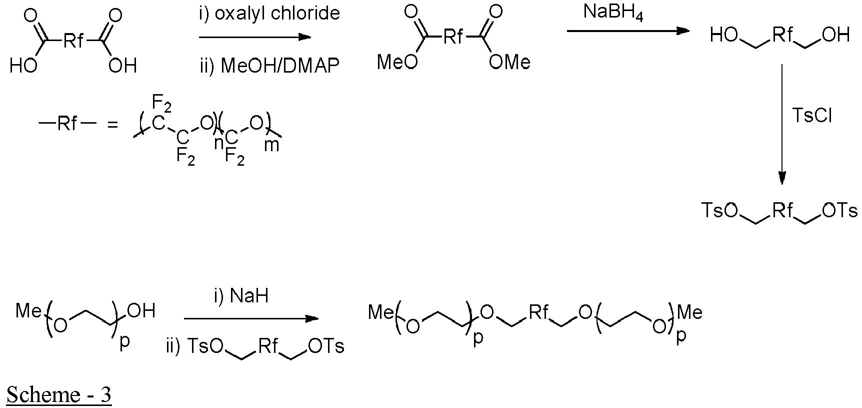

### Step (i):

20 g of FOMBLIN Z DIAC (Mw=4000 g/mol; Solvay) is taken in a 100 mL two neck round bottom flask equipped with a magnetic stirrer bar, a condenser and a rubber seal. The flask is placed under vacuum and refilled with argon three times to outgas the polymer. 50 mL of HFE Novec^{™} 7200 is added via the rubber seal to dissolve the polymer and 4.25 mL (5 eq) of oxalyl chloride is added drop wise followed by 50 µL of DMF. The reaction is stirred at 60°C overnight and the mixture is evaporated dryness to obtain the acyl chloride functionalized product.

This product is dissolved in 50 mL of HFE Novec^{™} 7200 in a 100 mL two neck round bottom flask equipped with a magnetic stirrer bar, a condenser and a rubber seal and 2.5 g of polymer supported 4-dimethylaminopyridine (1.5 eq) is added. The reaction mixture is placed under argon and 12.5 mL of anhydrous methanol is added via the rubber seal. The reaction is stirred at 60°C overnight. The polymer supported 4-dimethylaminopyridine is filtered and the methyl ester functionalized product is obtained after evaporation.

### Step (ii):

7.12 g of sodium borohydrate (10 eq.) is taken in a 100 mL two neck round bottom flask equipped with a magnetic stirrer bar, a condenser and a rubber seal and 5 mL of HFE Novec^{™} 7200 and 4mL of diethylene glycol dimethylether are added. The reaction mixture is placed under argon at 0°C and 15 g of the previous methyl ester functionalized product dissolved in 15 mL of anhydrous HFE Novec^{™} 7200 is added drop wise. The reaction is heated at 75°C for one hour under stirring. After cooling, the reaction mixture is diluted with 150 mL of HFE Novec^{™} 7200 and the reaction is quenched with 100 mL of aqueous buffer solution pH7. The two phases are separated and the fluorinated phase is dried with sodium sulphate and filtrated. The alcohol functionalized product is obtained after evaporation.

### Step (iii):

4 g of alcohol product is dissolved in 30 mL of anhydrous HFE Novec^{™} 7200 and introduced in a two neck round bottom flask equipped with a magnetic stirrer bar, a condenser and a rubber seal. The reaction mixture is placed under argon and 2.75 mL of triethylamine (10 eq) is added drop wise under stirring.

3.75 g of tosyl chloride (10 eq.) dissolved in 20 mL of anhydrous THF is added drop wise. The reaction is placed at 60°C under stirring for 3 days. After cooling, 10 mL of ethanol is added and the fluorinated phase is washed twice with 10 mL of ethanol. The tosyl functionalized product is obtained after evaporation.

### Step (iv):

600 mg of sodium hydride dispersed in mineral oil (60 w/w%; 20 eq.) is washed with heptanes and introduced in a two neck round bottom flask equipped with a magnetic stirrer bar, a condenser and a rubber seal. 5 mL of anhydrous THF is added to disperse the sodium hydride. 7.5 g of Me-O-PEG (Mw=5000 g/mol; 2 eq.) dissolved in 10 mL of THF is added drop wise under argon. The hydroxyl deprotonation is performed under stirring during 30 min. 3g of the tosyl functionalized product dissolved in 10 mL of anhydrous HFE Novec^{™} 7200 is added drop wise and the reaction mixture is placed at 60°C under argon for 3 days.

After cooling, the reaction is quenched with HCl 1M, the solvent is evaporated and the product is dissolved in 30 mL of FC770 and washed 3 times with 10 mL of ethanol. The final product is obtained after the evaporation of the fluorinated phase.

**Example 3:** Droplet generation of surface active agents of general formula: R_{f}-L-Rₕ-L-R_{f} wherein R_{f}= CF₃-CF₂-CF₂-(-O-CF₂-CF₂-)ₙ-(-O-CF₂-)ₘ- with n=27 and m=25; L = -C(O)NH-and Rₕ= -(-CHCH₃-CH₂-O-)ₚ-(-CH₂-CH₂-O-)_{q}-(-CHCH₃-CH₂-O-)ₚ- p=3.4 and q=16 PDMS (polydimethylsiloxane) microfluidic devices were fabricated by backing PDMS at 65 °C overnight after pouring onto silica wafer. The PDMS devices were then plasma bound onto glass and baked again overnight. A surface treatment was performed by injecting Aquapel inside de channels and drying it with an argon flux to make the channel surfaces hydrophobic. The microfluidic devises were incubated at 60 °C overnight before use.

Flow-focusing drop makers were used with channels of 50 µm in order to create the droplets.

### Results:

Oil phase: Rf-L-Rh-L-Rf 4w/w% in HFE7500; 300 µL/h
Water phase: Rhodamine 6G 10 mM in milliQ water; 150 µL/h
Extraction: -150 µL/h

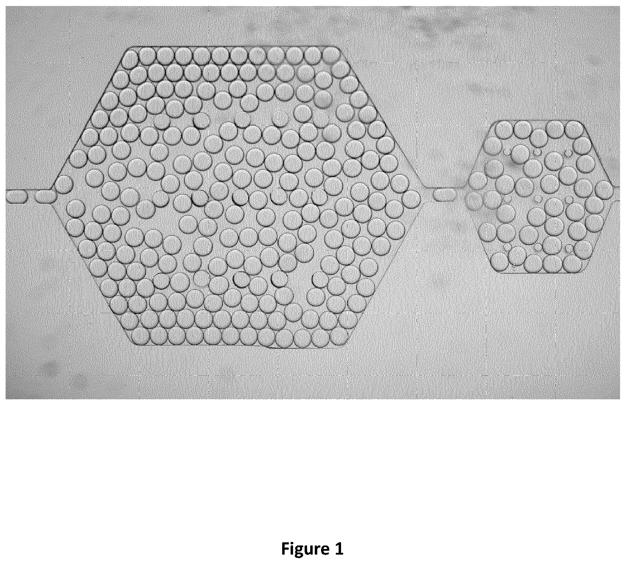

The droplets generated were perfectly stable and monodispersed (coefficient of variation < 3%). Refer to Figure 1 which shows the picture of the droplets in the microfluidic observation chamber after generation.

### Example 4: Thermocycling test on droplets generated in Example 3

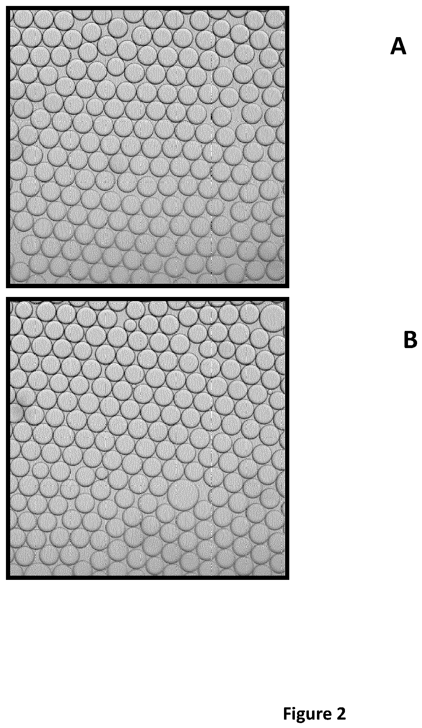

The emulsion of Example 3 was collected in a plastic container. A part of this emulsion was directly reinjected in a reinjection chamber (Figure 2 A) and another part of this emulsion was first thermocycled and second reinjected in a reinjection chamber (Figure 2 B).

Thermocycling condition:
30 cycles
- 95°C during 30s
- 55°C during 1min
- 72°C during 5min
- 40°C during 1min

The difference of coefficient of variation (CV) between before and after thermocycling was 3.5%.

Refer to Figure 2 which shows pictures of the formed droplets (A) before thermocycling and (B) after thermocycling.

### Example 5: Double emulsion generation

Microfluidic devices are fabricated by the same procedure as described in example 3 by using a dual flow focusing Si wafer with a 15 µm relief height flow focuser for the generation of the water in oil emulsion and a 40 µm relief height flow focuser for the generation of the water-in-oil-in-water double emulsion. A surface treatment was performed in order to make the channel surfaces hydrophilic.

### Result:

- Inner aqueous phase: PBS (phosphate-buffered saline) or PBS + fluorescein 100 µM; 75 µL/h
- Oil phase: surfactant of Example 1) 4 w/w% in HFE7500; 275 µL/h
- Continuous aqueous phase: surfactant of Example 2) 4 w/w% in PBS; 2500 µL/h

Double emulsions are collected in a plastic container and reinjected in an observation chamber. Stability test is performed at 37°C for one week.

Double emulsion with fluorescein and empty double emulsion are combined and reinjected in an observation chamber and leakage test is performed by observing the fluorophore exchange between full and empty droplets at 37°C for one week.

## Claims

1. A surface-active material comprising one or more fluorosurfactants having the following formula (I) or (II), or the combination of one or more fluorosurfactants having the following formula (I) with one or more fluorosurfactants having the following formula (II)
R_{f}-L-Rₕ-L-R_{f} Formula (I)
or
Rₕ-L-R_{f}-L-Rₕ Formula (II)
wherein in each instance R_{f} is either H or is selected from one or more of the following units:
a) -(-CF₂-O-)ₘ-(CF₂-CF₂-O-)ₙ-CF₂-CF₂-CF₃ or
b) -CF₂-(-O-CF₂-CF₂-)ₙ-(-O-CF₂-)ₘ-
wherein m is between 0 and 80;
n is between 0 and 50; and
m+n is greater than 1
wherein Rₕ in formula (I) is selected from one or more of the following units:
a) -(-CH₂-CH₂-O-)ₚ-
wherein p is between 10 and 50;
b) -(-CH₂-CH₂-O-)ₚ-(-CHCH₃-CH₂-O-)_{q}-
wherein p is between 10 and 50 and q is between 1 and 20; and
wherein Rₕ in formula (II) is selected from one or more of the following units:
a) R-(-O-CH₂-CH₂-)p-
wherein p is between 10 and 120 and R is H or alkyl
b) R-(-CH₂-CH₂-O-)ₚ-(-CHCH₃-CH₂-O-)_{q}-
wherein p is between 10 and 120; q is between 1 and 120 and R=H or alkyl; or
c) R-C-[(-CH₂-CH₂-O-)ₚ-]₃
wherein p is between 3 and 20 and R is H; alkyl; or polyalkylene oxide;
and wherein L is a linking group.

2. The surface-active material of claim 1, wherein R_{f} has a molecular weight greater than 3,000 g/mol.

3. The surface-active material of claim 1 or 2, wherein Rₕ has a molecular weight greater than 300g/mol.

4. The surface-active material of any one of the claims 1-3, wherein R_{f}:Rₕ are present with a ratio of molecular weights greater than or equal to 3:1.

5. The surface-active material of any one of the preceding claims, wherein the linking group may be selected from -CH₂-O- or -O-CH₂-, -C(O)NH-, -C(O)NMe-, -NHC(O)-, - NMeC(O)-, -C(O)S-, -SC(O)-, -C(O)O-, -OC(O)-, -OC(O)O-, -OC(O)NH-, -OC(O)NMe-, -O-, -S-, - NHC(O)NH-, -NMeC(O)NH, -NHC(O)NMe-, -NHC(O)O-, -NMeC(O)O-,-SO₂NH-, - NHSO₂-, -NHSO₂-C₆H₄-O- and -O-C₆H₄-SO₂NH-.

6. The surface-active material of any one of the preceding claims, wherein the linking group is either -CH₂-O- or -O-CH₂-.

7. The surface-active of any one of the preceding claims, wherein the fluorosurfactant has the structure:
CF₃-CF₂-CF₂-(-O-CF₂-CF₂-)ₙ-(-O-CF₂-)ₘ-CH₂-O-(-CH₂-CH₂-O-)ₚ-CH₂-(-CF₂-O-)ₘ-(-CF₂-CF₂-O-)ₙ-CF₂-CF₂-CF₃, wherein n=27, m=24 and p=23.

8. The surface-active of any one of the preceding claims, wherein the fluorosurfactant has the structure:
CH₃-(-O-CH₂-CH₂-)ₚ-O-CH₂-(-CF₂-CF₂-O-)ₙ-(-CF₂-O-)ₘ-CF₂-CH₂-O-(-CH₂-CH₂-O-)ₚ-CH₃, wherein n=m=21 and p=114.

9. A process for making the surface-active material as defined in any one of the preceding claim, the process comprising the following steps:
Step (i) reacting a compound of the formula (III) 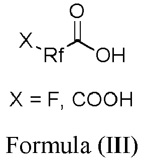 wherein Rf is as defined in claim 1, in the presence of one or more reagents or solvents to obtain a compound having the following formula (IV) 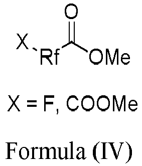
Step (ii) reducing the compound of formula (IV) to compound of formula (V) in the presence of one or more reagents or solvents: 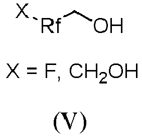
Step (iii) converting the compound of formula (V) to a compound of formula (VI) in the presence of suitable agents and solvents 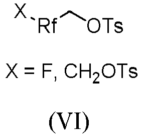
Step (iv) reacting the compound of formula (VI) with suitable Rₕ compound as defined in claim 1 in the presence of suitable reagents and solvents to obtain the compound of formula (I) or (II):
R_{f}-L-Rₕ-L-R_{f} (I)
Or
Rₕ-L-R_{f}-L-Rₕ (II)

10. The process according to claim 9, wherein the suitable reagent used in step (i) may be selected from oxalyl chloride, SOCl₂, PCl₃, PCl₅, Ph₃P+CCl₄, Cyanuric chloride, and the suitable solvent used may be selected from DCM, DMF, THF, Acetone, AcOEt, Acetonitrile, Diglyme, DMSO mixed with an hydrofluoroether oil, wherein the suitable reducing agent used in step (ii) may be selected from NaBH₄, BH₃, 9-borabiccyclo[3.3.1]nonane, LiAlH₄, AlH₃, H₂, KBH₄, LiAlH(OMe)₃, LiAlH(SMe)₃ and the suitable solvent used may be selected from DCM, DMF, THF, Acetone, AcOEt, Acetonitrile, Diglyme, DMSO mixed with an hydrofluoroether oil, wherein the suitable agent used in step (iii) have the general formula: 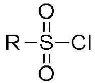 where R is an alkyl or an aryl group which can be partially or totally fluorinated, and the suitable solvent used may be selected from DCM, DMF, THF, Acetone, AcOEt, Acetonitrile, Diglyme, DMSO mixed with an hydrofluoroether oil, and wherein the suitable reagent used in step (iv) may be selected from Li, Na, K, NaH, KH, tBuOK, sodium bis(trimethylsilyl)amide, lithium diisopropylamide and the suitable solvent used may be selected from DCM, DMF, THF, Acetone, AcOEt, Acetonitrile, Diglyme, DMSO mixed with an hydrofluoroether oil.

11. An emulsion comprising a surface-active material as defined in any one of claims 1-8, wherein said emulsion is a single, double or multiple emulsion.

12. Use of a surface-active material as defined in any one of claims 1-8 for the preparation of an emulsion, wherein said emulsion is a single, double or multiple emulsion.

13. Use of the surface-active material as defined in any one of claims 1-8 in a microfluidic channel or device, in a molecular isolation in larger fluidic devices, containers or vats, or in an automated device with associated software that controls a microfluidic channel or device.

14. Use of an emulsion as claimed in claim 16-18 in a microfluidic channel or device or in an automated device with associated software that controls a microfluidic channel or device.
